# EUROPEAN PATENT APPLICATION

(11) **EP 1 631 004 A2**
(43) Date of publication of application: **01.03.2006**
(21) Application number: 05106897.1
(22) Date of filing: 27.07.2005
(51) Int. Cl.: H04L 12/26

(54) **Method for monitoring media resource consumption in a network**

(30) Priority: 28.07.2004 US 900728
(71) Applicant: MICROSOFT CORPORATION, Redmond, Washington 98052-6399 (US)
(72) Inventor: Zigmond, Daniel J., Redmond, WA 98052 (US); Thukral, Vivek, Redmond, WA 98052 (US)
(74) Representative: Zimmer, Franz-Josef

(57) **Abstract**

Strategies are described for monitoring resources (e.g., media resource) in a system that includes multiple processing mechanisms (e.g., set-top boxes) and multiple associated presentation devices (e.g., television sets). The strategies involve assigning one of the processing mechanisms the role of master processing mechanism, which defines the other processing mechanisms as slave processing mechanisms. The master processing mechanism initially collects resource consumption information that describes the resources currently being consumed by the slave processing mechanisms. Thereafter, the master processing mechanism receives resource consumption information from each slave processing mechanism upon a channel change event occurring at the slave processing mechanism. The master processing mechanism compiles the collected resource consumption information into a resource consumption list, and displays a resource consumption presentation based on the list. The resource consumption presentation can include textual and/or picture information that describes the resources currently being consumed by the slave processing mechanisms.

## Description

### TECHNICAL FIELD

This invention relates to strategies for monitoring the consumption of resources, and, in a more particular implementation, to strategies for monitoring the consumption of media resources in a local environment, such as a home which includes multiple televisions and/or other devices for presenting the media resources.

### BACKGROUND

Many homes today include multiple televisions or other devices for presenting media resources. A family room may include a television for general use by all family members, while other rooms in the home may include televisions for primary use by specific family members. For instance, a child's bedroom may include a television for primary use by that child.

In today's commercial environment, users of any of these televisions may potentially select from a vast pool of media resources delivered over a great number of channels. And the growing practicality and popularity of the consumption of IP-delivered resources can be expected to exponentially increase the pool of available resources in years to come. However, some of the media resources may have mature content, and therefore may be inappropriate for viewing by some family members, particularly younger viewers. There has accordingly been interest in mechanisms for restricting some viewers from consuming objectionable media resources.

The marketplace has responded to the above need by providing several mechanisms for restricting content. Many of these mechanisms use filtering techniques that block the consumption of resources when these resources satisfy certain criteria. For instance, a television program may have various metadata associated therewith, including a maturity rating that provides some indication of the program's suitability for consumption by children. The filtering techniques can prevent certain family members from accessing resources if these resources have a maturity level above a prescribed level. Such filtering techniques can be implemented at a head-end site associated with a source of media resources or locally by the televisions (or by associated set-top boxes).

The above-described filtering techniques are not fully satisfactory in all circumstances. Not all media resources are coded in a uniform manner to reflect the suitability of their content for different family members. Accordingly, these filtering techniques may fail to block certain objectionable media resources, or may unnecessarily block other media resources that contain no objectionable content. And even when these filtering techniques perform their function well, they may unduly complicate the dissemination and consumption of media resources within the home, potentially making it more difficult for authorized family members (e.g., adults) to receive permissible media resources having mature content. Or the complexity of the filtering techniques may undesirably add to the cost associated with the dissemination of media resources, hence negatively affecting the ability of such techniques to compete in the marketplace.

There is accordingly a need for more satisfactory strategies for restricting the consumption of media resources in local environments, such as within a home containing multiple televisions or other presentation devices. More generally stated, there is a need for more satisfactory strategies for allowing a monitoring agent to monitor the consumption of resources by one or more individuals.

### SUMMARY

According to one exemplary implementation, a method is described for monitoring resource consumption in a local environment including a plurality of processing mechanisms. The method comprises: (a) assigning one of the processing mechanisms the role of master processing mechanism, thereby making at least one other of the processing mechanisms a slave processing mechanism; (b) collecting, by the master processing mechanism, resource consumption information that describes the consumption of a resource by the above-mentioned at least one slave processing mechanism; and (c) providing a resource consumption presentation based on the collected resource consumption information.

Additional implementations and features will be described in the following.

### BRIEF DESCRIPTION OF THE DRAWINGS

Fig. 1 shows an exemplary system for implementing a strategy for monitoring the consumption of resources in a local environment.
Fig. 2 shows an exemplary local environment containing multiple processing mechanisms and presentation devices located in different rooms.
Fig. 3 shows a more detailed exemplary implementation of the system shown in Fig. 1.
Figs. 4-9 show exemplary user interface presentations for implementing the monitoring operation performed by the system of Fig. 1.
Figs. 10-12 show exemplary procedures for implementing the monitoring operation performed by the system of Fig. 1.

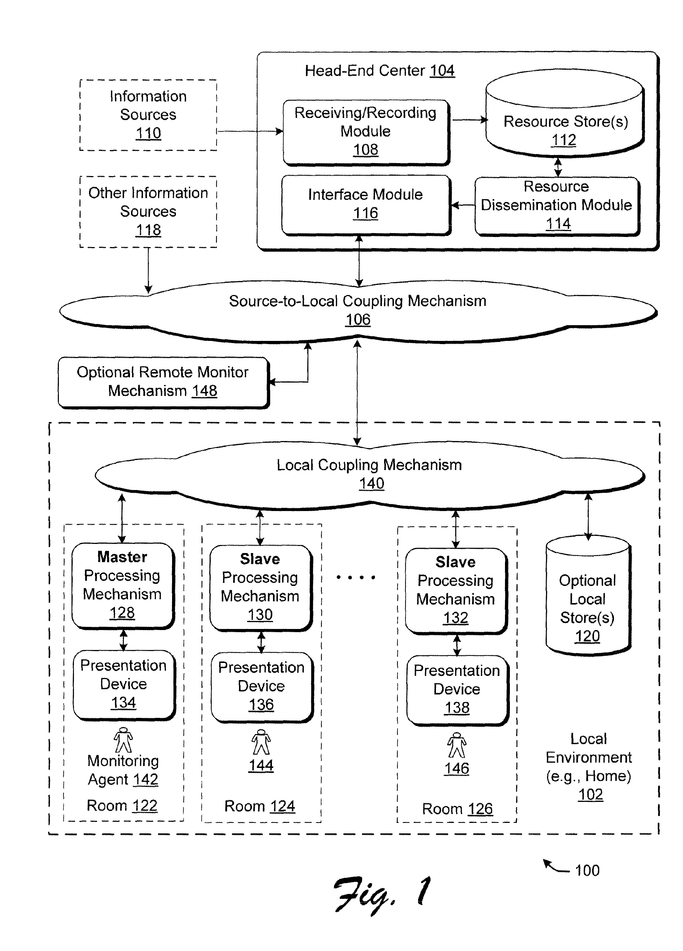

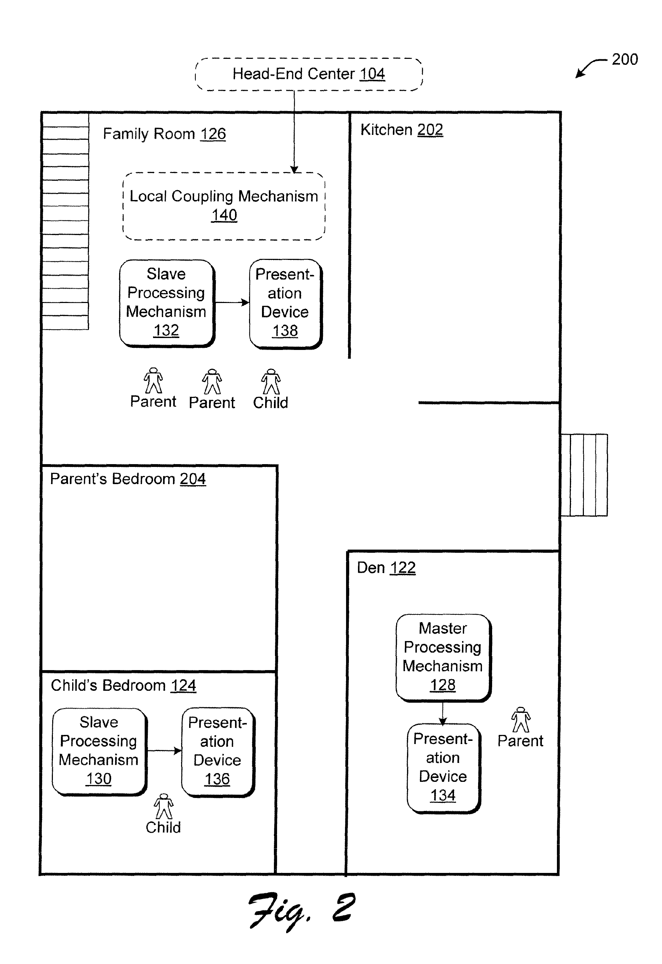

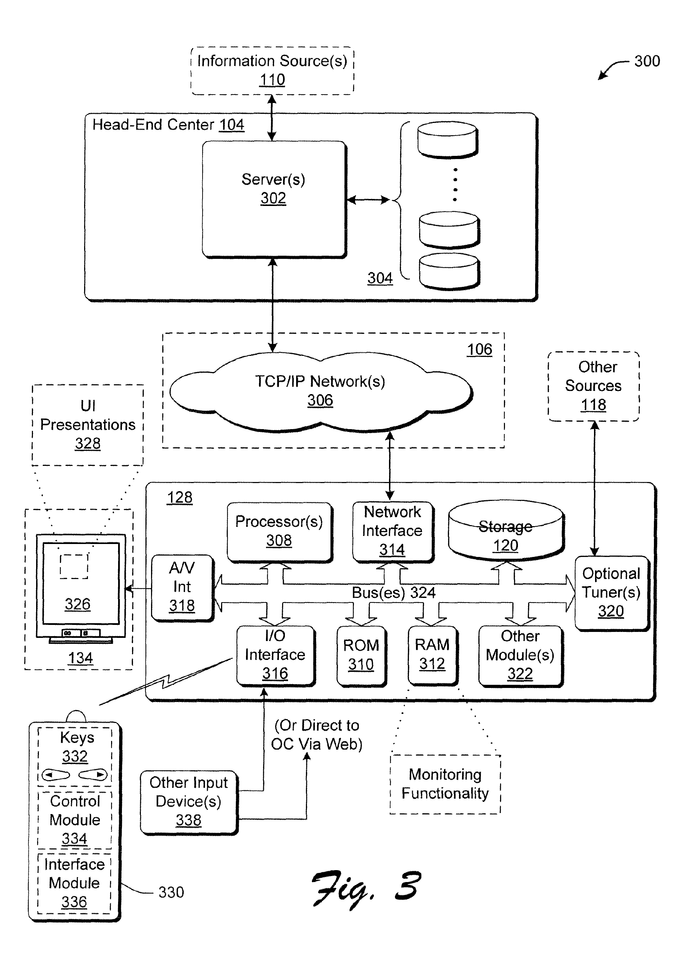

The same numbers are used throughout the disclosure and figures to reference like components and features. Series 100 numbers refer to features originally found in Fig. 1, series 200 numbers refer to features originally found in Fig. 2, series 300 numbers refer to features originally found in Fig. 3, and so on.

### DETAILED DESCRIPTION

The strategies described herein monitor the consumption of resources in a local environment. More specifically, the strategies allow a guardian or other monitoring agent to monitor the consumption of resources in the local environment without applying rigid filtering rules regarding the consumption of resources by specific members associated with the local environment, and without unduly increasing the cost and/or complexity of the infrastructure used to disseminate resources.

The term "resource" encompasses any kind of information that can be consumed by a user, such as audio resources (e.g., music, etc.), still picture resources (e.g., digital photographs, etc.), moving picture resources (e.g., television programs, movies, etc.), computer programs (e.g., games, etc.), markup language resources (e.g., hypertext markup language resources received via a wide area packet network), and so on. The resources can be analog or digital or a combination of analog and digital. The resources can be received in one format and then converted into another format (such as received in analog format and then converted into digital format). The resources can also include (or can omit) interactive content.

The term "local environment" refers to any environment associated with a set of presentation devices. In a common but non-limiting case, the local environment refers to a home having multiple televisions, stereo systems, or other presentation devices. However, in other cases, the local environment can refer to other groupings of presentation devices, such as a grouping of presentation devices associated with a commercial, governmental or academic organization. Another possible grouping may correspond to a collection of devices associated with multiple homes in a neighborhood, a subset of devices located within a single building, and so on. In another case, the local environment may correspond to an abstraction, defined by any grouping of participants. In this case, the local environment need not correspond to a physical aggregation of presentation devices within a geographic area; rather, the participants can be coupled together by any coupling mechanism, such as one or more networks. In short, there are no constraints on the application of the principles disclosed herein to different environments.

The term "monitoring agent" refers to an individual or functionality for monitoring the consumption of resources by at least one monitored individual (or monitored functionality). In the application most commonly evoked in this disclosure, the monitoring agent refers to someone who has supervisory authority over one or more monitored individuals. This is the case in a parent-child relationship, where the parent wishes to keep abreast of the resources that his or her child is consuming. However, there need not be a hierarchical relationship between monitoring agent and person being monitored. In another application, for instance, peers may wish to monitor each other's resource consumption for mainly informational purposes, rather than supervisory purposes. Accordingly, although the supervisory relationship is featured in this disclosure, nothing in this disclosure restricts application of the principles described herein to a supervisory relationship.

This disclosure includes: Section A which describes an exemplary system for monitoring the consumption of resources in a local environment; Section B which describes exemplary user interface (UI) presentations for use in the system of Section A; and Section C which describes exemplary procedures for implementing the monitoring of resource consumption using the system of Section A.

### A. Exemplary System

Fig. 1 shows an exemplary system 100 for monitoring the consumption of resources. Generally, any of the functions described with reference to the figures can be implemented using software, firmware (e.g., fixed logic circuitry), manual processing, or a combination of these implementations. The term "logic, "module" or "functionality" as used herein generally represents software, firmware, or a combination of software and firmware. For instance, in the case of a software implementation, the term "logic," "module," or "functionality" represents program code that performs specified tasks when executed on a processing device or devices (e.g., CPU or CPUs). The program code can be stored in one or more computer readable memory devices. More generally, the illustrated separation of logic, modules and functionality into distinct units may reflect an actual physical grouping and allocation of such software and/or hardware, or can correspond to a conceptual allocation of different tasks performed by a single software program and/or hardware unit. The illustrated logic, modules and functionality can be located at a single site (e.g., as implemented by a processing device), or can be distributed over plural locations.

Broadly, the system 100 includes a home environment 102 that receives resources from a head-end center 104 via a source-to-local coupling mechanism 106. High-level features of the system 100 will be described with reference to Figs. 1 and 2. Fig. 3 will provide more detailed information regarding the implementation of the system 100.

The head-end center 104 includes a receiving/recording module 108 for receiving resources from one or more information sources 110. The information sources 110 can represent any entity which produces or provides programs, such as conventional commercial cable or satellite television providers, one or more commercial Video-On-Demand (VOD) entities, one or more publishing houses, one or more library sources of programs, any kind of Internet-enabled repository of information, and so on. In one example, an entity that administers the head-end center 104 can enter into a contractual arrangement with the entity (or entities) that supply the resources. In another case, the entity that administers the head-end center 104 can itself produce at least some of the resources that it provides to clients.

As mentioned above, the resources can include any kind or combination of audio and/or visual information for consumption by users in the local environment 102. The resources can optionally include interactive content, as in the exemplary case of video games. Further, the resources can originate from live sources or pre-recorded sources. The live sources correspond to sources that supply programs that capture live events, or programs that otherwise have some real-time aspect associated with them. One exemplary live source may correspond to a commercial entity which supplies an audio-visual presentation of a live sporting event. Pre-recorded sources correspond to sources that supply programs that have been already recorded in their entirety.

The receiving/recording module 108 can receive these resources via network coupling, cable cabling, wireless (e.g., satellite) coupling, and so on, and then store the resources in a resource store 112. This resource store 112 can represent a single database, or can represent multiple distributed databases spread over multiple respective sites.

The head-end center 104 also includes a resource dissemination module 114 for supplying resources to the local environment 102. In the context of an Internet Protocol (IP) distribution paradigm, the resource dissemination module 114 can deliver resources to the local environment 102 in a unicast fashion. That is, each resource can have an identifier associated therewith, such as a Uniform Resource Locator (URL). A client can request and receive a resource by specifying its identifier in an on-demand fashion. In this manner, the resource dissemination module 114 can be simultaneously engaged in streaming different parts of the same resource to different clients.

The head-end center 104 can supply resources to users using different resource-packaging paradigms. In one case, the head-end center 104 can group resources into different respective "channels," and allow the users to select resources by specifying channel identifiers. A single channel can provide a defined chronological sequence of resources according to the traditional broadcast model of program delivery. In this case, the user can receive a desired resource by "tuning" to the channel at a prescribed time. In another case, a single channel can provide a portal that allows the user to select from a subset of resources associated with the channel. In this case, the user can receive a desired resource by "tuning" to the channel at any time and selecting one of the resources that the channel offers in an on-demand manner. In still another case, a single channel can be associated with a single resource. In this case, the user can receive this resource by "tuning" to the channel at any time and selecting this resource in an on-demand manner. Thus, subsequent reference to "channels" can refer to any of these "virtual" channel scenarios, as well as additional potential scenarios (including the conventional receipt of resources over channels by tuning to respective physical frequencies associated with these channels).

The resource dissemination module 114 can also execute a number of administrative tasks associated with the dissemination of resources. Such tasks include account maintenance as well as any tasks required to support the monitoring of resources. However, as will be described below, one exemplary implementation of the monitoring functionality seeks to allocate most (or all) of the processing tasks associated with the monitoring functionality to the local environment 102. This potentially reduces the processing load imposed on the head-end center 104, as well as potentially reduces the cost of the services provided by the head-end center 104.

The head-end center 104 also includes an interface module 116 for coupling the head-end center 104 to the source-to-local coupling mechanism 106. The interface module 116 can be implemented using any technology, such as a broadband coupling mechanism, a DSL coupling mechanism, a modem coupling mechanism, and so on. The source-to-local coupling mechanism 106 itself can comprise any type of mechanism for transferring resources in streaming fashion, bulk *en bloc* fashion as a single file, or in some other fashion. For instance, the coupling mechanism 106 can include any kind of network (or combination of networks), such as a TCP/IP wide area network (e.g., the Internet), an intranet, DSL network infrastructure, point-to-point coupling infrastructure, and so on. In the case where the Internet is used to disseminate resources, the source-to-local coupling mechanism 106 can include various hardwired and/or wireless links, routers, gateways, name servers, and so on.

In addition to receiving resources from the head-end center 104, the local environment 102 can also receive resources from other information sources 118. For instance, the local environment 102 can receive resources from one or more conventional broadcast sources, such as conventional broadcast cable or satellite broadcast sources. In this case, consumption of resources can actually involve tuning a physical tuner to a frequency on which the resources are being broadcast. Further, the local environment 102 can also receive resources from a source 120 which belongs to the local environment 102. This source 120 may represent a video jukebox, a computer hard drive or other storage media, and so on.

As described above, the local environment 102 can represent a conventional residential home. Alternatively, the home environment 102 can represent any other kind of building or local setting, such as an apartment building, a school, an office building, a government building, etc. Instead of a single building, the home environment 102 can pertain to a collection of buildings, e.g., a campus, neighborhood, or other defined geographic area. Or the home environment can pertain to a part of single building, such as one or more floors of an apartment building, hospital, and so forth. In any case, the home environment 102 can include multiple rooms, compartments, or other areas, such as room 122, room 124, and room 126. For instance, room 122 can correspond to a den. Room 124 can correspond to a child's bedroom. Room 126 can correspond to a family room. This assignment of rooms is merely illustrative. In another case, the local environment 102 can correspond to an abstraction, defined by any grouping of participants coupled together via one or more communication mechanisms; in this case, the participants need not operate within the enclosure defined by a fixed geographical domain.

Different processing mechanisms (128, 130, ... 132) and associated presentation devices (134, 136, ... 138) are located in the respective rooms (122, 124, ... 126). That is, processing mechanism 128 and presentation device 134 are located in room 122, processing mechanism 130 and presentation device 136 are located in room 124, and processing mechanism 132 and presentation device 138 are located in room 126. In general, a processing mechanism (128, 130, ... 132) can correspond to any equipment used to process resources for consumption at a presentation device. An exemplary processing mechanism (128, 130, .... 132) can correspond to a set-top box or may correspond to software and/or hardware functionality integrated into the associated presentation device (134, 136, ... 138) itself. Alternatively, any exemplary processing mechanism (128, 130, ... 132) can correspond to any kind of computing device (such as a personal computer) running any kind of software, a digital video playback device (DVD), a personal video recording device (PVR), and so on. An exemplary presentation device (134, 136, ... 138) can correspond to a television, an audio presentation device (e.g., a stereo system), a computer monitor, and so forth. Although not shown, any room (122, 124, ... 126) can include more than one processing mechanism and associated presentation device.

In one exemplary implementation, a local coupling mechanism 140 couples the processing mechanisms (128, 130, ... 132) together. The local coupling mechanism 140 can be implemented as part of a wide area IP network (e.g., the Internet), an intranet, any kind of local area network (LAN) (e.g., an Ethernet network), a point-to-point coupling mechanism, or any other type of coupling mechanism. The local coupling mechanism 140 can be physically implemented using any kind of hardwired lines and/or wireless links (e.g., radio, infrared, telephone lines, power lines, etc.). The local coupling mechanism 140 and the source-to-local coupling mechanism 106 can also share various coupling resources, or, indeed, can represent the same networks. Generally, the local coupling mechanism 140 can be used to transmit control instructions between processing mechanisms (128, 130, ... 132) to affect the monitoring of resources; alternatively, or in addition, the local coupling mechanism 140 can be configured to permit actual transfer of resource content between processing mechanisms (128, 130,... 132).

An overview of the operation of the system 100 is provided as follows. One of the processing mechanism in system 100 serves the role of monitoring the resources being consumed by the other presentation mechanisms. The processing mechanism that serves the monitoring role is referred to as a master processing mechanism, while the remaining processing mechanisms are referred to as slave processing mechanisms. In the exemplary scenario of Fig. 1, processing mechanism 128 is assigned the role of the master processing mechanism, while processing mechanism 130 and processing mechanism 132 are assigned the role of slave processing mechanisms. This means that the master processing mechanism 128 can monitor the resources that are being presented on presentation device 136 (associated with slave processing mechanism 130) and presentation device 138 (associated with slave processing mechanism 132). For instance, a monitoring agent 142 (such as a parent) may use the master processing mechanism 128 to monitor the resources that are being consumed by her children (144, 146) in rooms 124 and 126, respectively.

In one exemplary implementation, all of the processing mechanisms (128, 130, ... 132) in the local environment 102 have identical functionality. In this case, any processing mechanism (128, 130, ... 132) can assume the role of master or slave. Different strategies can be used to assign such roles to the processing mechanisms (128, 130, ... 132). In one case, each processing mechanism (128, 130, ... 132) includes monitoring functionality that can be invoked from a main menu of functions. Activation of the monitoring functionality on a particular processing mechanism automatically triggers a series of events that configures that processing mechanism as the master processing mechanism, and that configures the remaining processing mechanisms as slave processing mechanisms. The processing mechanisms (128, 130, ... 132) can make the invocation of the monitoring functionality contingent on the input of a valid password. This allows the system 100 to restrict monitoring privileges to only certain individuals in the local environment 102, such as guardians. In another implementation, the processing mechanisms (128, 130, ... 132) can include functionality that allows any one processing mechanism (128, 130, .... 132) to assign the role of master to any other processing mechanism. In another implementation, any of the processing mechanisms (128, 130, ... 132) can receive a plug-in module (such as a card) which enables it to assume the role of master processing mechanism. In another implementation, the processing mechanisms (128, 130, ... 132) can receive software or configuration parameters from the head-end center 104 (or from any other source) which configures the mechanisms to serve as either master or slave processing mechanisms. In still another implementation, the processing mechanisms (128, 130, ... 132) can include specific fixed logic (e.g., software or firmware) which configures these mechanisms to serve the role of either master or slave processing mechanisms. These are merely illustrative examples; still additional strategies can be used to assign the role of master and slave to the processing mechanisms (128, 130, .... 132).

In one case, once one processing mechanism has been assigned the role of master, no other processing mechanism can assume the role of master (until the first-assigned master relinquishes its role as master). In another implementation, the system 100 can permit multiple processing mechanisms to function as masters at the same time. For example, in this case, both processing mechanism 128 and processing mechanism 130 could function as master processing mechanisms. In this case, master processing mechanism 128 would consider processing mechanism 130 and processing mechanism 132 as slaves to be monitored, while master processing mechanism 130 would consider processing mechanism 128 and processing mechanism 132 as slaves to be monitored. In this manner, if so permitted, different individuals in the family can keep tabs on the consumption activities of other members in the family. However, to facilitate discussion, the ensuing description assumes that the system 100 allows only one processing mechanism to assume the role of master, which, in the exemplary case of Fig. 1, corresponds to processing mechanism 128.

Once the master processing mechanism 128 assumes the role of master, it sends a message to the other processing mechanisms (130, ... 132) informing these mechanisms (130, .... 132) of its master status. This message also effectively configures the other processing mechanisms (130, ... 132) as slave processing mechanisms. The slave processing mechanisms (130, ... 132) respond to this message by transmitting information to the master processing mechanism 128 regarding the current resources that are being consumed by the slave processing mechanisms (130, ... 132). The slave processing mechanisms (130, ... 132) can communicate this resource consumption information by forwarding information that identifies the nature of resources that are being consumed, the channels on which the resources are being consumed, and so forth. Upon receipt of the resource consumption information from the slave processing mechanisms (130, ... 132), the master processing mechanism 128 assembles a resource consumption list. The resource consumption list identifies the slave processing mechanisms (130, ... 132) in the local environment 102 and the resources that are currently being consumed by these slave processing mechanisms (130, .... 132).

Subsequently, the slave processing mechanisms (130, ... 132) can be configured to notify the master processing mechanism 128 of any changes in their respective consumption of resources. For instance, assume that child 144 who interacts with processing mechanism 130 changes channels to switch between the consumption of a first resource provided on a first channel and a second resource provided on a second channel. This will trigger that particular slave processing mechanism 130 to transmit resource consumption information to the master processing mechanism 128 that alerts the master processing mechanism 128 of this channel change event. Such resource consumption information can include various metadata associated with the change, such as the identity of the old channel that the child 144 was tuned to, the identity of the new channel that the child has tuned to, the rating and/or other electronic program guide (EPG) information associated with the new channel, and so on.

In the above exemplary implementation, the slave processing mechanisms (130, ... 132) can be configured to transmit the resource consumption information to the master processing mechanism 128 on their own initiative when there is a channel change event; however, the system 100 can also be configured such that the master processing mechanism 128 periodically polls the slave processing mechanisms (130, ... 132) and collects any resource consumption information associated with channel change events that may have occurred between successive pollings.

In one example, the above-described monitoring of resource consumption can be performed entirely within the local environment 102 without the use of the services of the head-end center 104. This reduces the complexity of the services provided by the head-end center 104, and thus potentially reduces the cost of such services. In this case, the processing mechanisms (128, 130, ... 132) can communicate among themselves via the local coupling mechanism 140 (e.g., via a local LAN network). In another example, the head-end center 104 can coordinate the monitoring functionality. For instance, the head-end center 104 can route resource consumption information between processing mechanisms (128, 130, ... 132) using the source-to-local coupling mechanism 106 in addition to the local coupling mechanism 140.

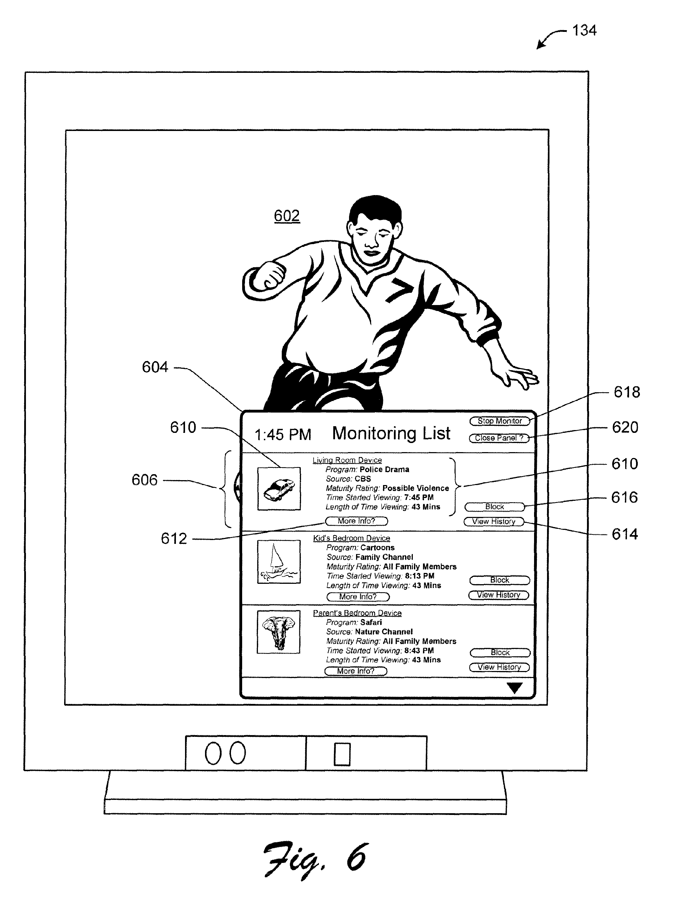

The master processing mechanism 128 can employ different techniques to present its compiled resource consumption list. This list can be presented to the monitoring agent 142 (e.g., who may represent a parent or other guardian in the home, or some other individual). According to one technique, the master processing mechanism 128 can present a user interface (UI) presentation (not shown in Fig. 1) that displays the resource consumption list. This presentation is referred to as a "resource consumption presentation." The resource consumption presentation can include information regarding the resources that are concurrently being consumed by members of the local environment 102. Such information can include textual information that describes the channels being consumed by the members of the local environment 102. Optionally, the information can also include video and/or audio information pertaining to the resources being consumed. Figs. 6-9, to be described below in turn, provide illustrative resource consumption presentations that can be displayed to convey the above-described information. By way of preview, the resource consumption presentations can be presented as one or more picture-in-picture (PIP) presentations that can be overlaid "on top" of a primary resource that the monitoring agent 142 is concurrently consuming. For instance, the monitoring agent 142 may be watching a television program which interests her while simultaneously keeping abreast of the consumption of resources by her children who are consuming these resources in other rooms. (While the monitoring performed by the system 100 is described principally with reference to visual presentations, the system 100 can also output resource information in other forms, such as, in whole or in part, audible form.) Still further details regarding the monitoring functionality will be provided in later sections of this disclosure.

Finally, Fig. 1 shows that the monitoring agent 142 can also monitor resource consumption from the "vantage point" of a remote monitor mechanism 148. As the name suggests, the remote monitor mechanism 148 is located at a location which is remote with respect to the local environment 102. The remote location might correspond to a parent's workplace, a summer vacation house, a mobile location connected to the system 100 via wireless coupling, and so on. This remote monitor mechanism 148 can assume the role of master in any of the manners described above, such as by allowing a duly authorized user to enter password information at the remote monitor mechanism 148 to thereby invoke the monitoring functionality at the remote monitor mechanism 148. The remote monitor mechanism 148 can couple to the local environment 102 in different ways. In one technique, the remote monitor mechanism 148 can couple to the local environment 102 via the source-to-local coupling mechanism 106 (e.g., the Internet). Various firewalls and other security provisions can be employed to prevent non-authorized access to resource consumption information supplied by the local environment 102. In another example, the remote monitor mechanism 148 can connect directly to the local coupling mechanism 140 without the services of the source-to-local coupling mechanism 106. The system 100 can involve the head-end center 104 in coupling the remote monitor mechanism 148 to the local environment 102, or implement this coupling without the help of the head-end center 104.

In any scenario, the monitoring functionality can provide various mechanisms for allowing the monitoring agent 142 to respond to objectionable resource consumption by a monitored user of a slave processing mechanism (130, ... 132) (e.g., a child). In one case, the monitoring functionality can allow the monitoring agent 142 to block the monitored user's consumption of the objectionable resources. The user of the slave processing mechanism (130, ... 132) might, as a result of such blocking, be presented with a blanked out screen indicated that their resource consumption has been blocked. Or the user of the slave processing mechanism (130, ... 132) may be presented with a message that warns the user that they are receiving objectionable resources. The system 100 could be set up to automatically display the message, or to allow the monitoring agent 142 to select from a predetermined collection of messages, or to create one or more customized messages to suit their specific monitoring objectives.

More specifically, for instance, the system can provide a collection of pre-stored messages that the monitoring agent 142 can select from (e.g., via a menu or other user interface which presents information regarding these messages). Exemplary messages of a supervisory nature can include: "Restricted Content," "Stop Viewing This!," "You are Being Monitored!," and so forth. Other messages may be appropriate where the monitoring agent 142 is keeping abreast of the activities of other viewers for other purposes. For instance, someone in a household may wish to find out what others in her household (or other local setting, such as a hall in a college dormitory) are watching, e.g., to find out what others happen to find interesting, or perhaps in hopes of seeking out companions with whom to view a program. In this circumstance, an appropriate pre-stored message might be: "We are watching the same program - Will you join me and we can watch it together?," or "I am watching something you might be interested in - Tune in and watch it, or join me and we can watch it together," and so forth. In any of these cases, the monitoring agent 142 can also type in a personalized message (e.g., via a keyboard input device). Moreover, the slave presentation mechanisms (130, ... 132) can include an input device for allowing the monitored users to respond to the messages generated by the monitoring agent 142.

Still alternatively, the monitoring agent 142 might simply choose to respond to a viewer's determined consumption of resources by personally discussing this usage with the viewer. In any event, the monitoring functionality empowers the monitoring agent 142 to address resource consumption prohibitions in any manner that they feel appropriate without imposing inflexible rules that may not be appropriate for all kinds of resources and/or all viewers. This is distinct from traditional filtering strategies which may have the effect of imposing rules which indiscriminately block resources that match certain general criteria.

In another implementation, the system 100 can be configured such that the slave presentation mechanisms (130, ... 132) have functionality that enables them to block the ability of the monitoring agent 142 to monitor the consumption of resources at the salve presentation mechanisms (130, ... 132). This might be particularly appropriate where the relationship among participants is that of peers, rather than overseer and person being monitored. A slave processing mechanism (130, ... 132) can be configured to activate this feature via a suitably configured user interface presentation, and optionally upon entering a valid password to grant access to this functionality.

Fig. 2 describes one exemplary instance 200 of the local environment 102 shown in Fig. 1. This instance 200 corresponds to a residential home having multiple rooms, such as den 122, child's bedroom 124, family room 126, kitchen 202, and parent's bedroom 204. In this illustrative case, the den 122 includes the processing mechanism 128 that is concurrently serving the role of master processing mechanism, along with its associated presentation device 134. Child's bedroom 124 includes a processing mechanism 130 that is currently functioning as a slave processing mechanism, along with its associated presentation device 136. The family room 126 includes a processing mechanism 132 that is currently functioning as another slave processing mechanism, along with its associated presentation device 138. This arrangement is merely illustrative; additional rooms in the home can include other processing mechanisms and associated presentation devices.

The head-end center 104 can couple to the processing mechanisms (128, 130, ... 132) via the local coupling mechanism 140. The local coupling mechanism 140 can comprise various hardwired and/or wireless communication links within the home. In one case, each processing mechanism (128, 130, ... 132) can directly access the head-end center 104 via the local coupling mechanism 140. In another case, only one of the processing mechanisms (128, 130, ... 132) is directly coupled to the head-end center 104; in this case, the other processing mechanisms access the head-end center 104 via that directly connected processing mechanism.

In the example shown in Fig. 2, a parent has invoked the monitoring functionality in the den 122. The parent may specifically be interested in monitoring the resource consumption of her child who is watching, for example, television in his bedroom 124. The monitoring functionality allows the parent to perform this function while engaged in other tasks offered by the master processing mechanism 128. For instance, the parent may be watching another program of mature content, such as a crime drama, in the den 122, while simultaneously monitoring her child's resource consumption via a resource consumption presentation which is displayed as a PIP in the corner of the presentation device 134. Or assume that the master processing mechanism 128 corresponds to a personal computer device. In this case, the parent can be performing any kind of work, such as editing a document, creating a spreadsheet, responding to email, etc., while simultaneously keeping abreast of her child's resource consumption via the PIP presentation that appears on the presentation device 134 (which, in this case, can correspond to a computer display monitor).

Fig. 2 features the exemplary case where the local environment 102 is a residential home. However, as mentioned above, the local environment 102 can correspond to other settings, such as an academic setting, commercial setting, governmental setting, multi-household setting, and so on. For instance, a summer camp might provide individual processing mechanisms (e.g., set-top boxes) and associated televisions in its cabins. A guardian operating a master processing mechanism at a central site can monitor the resource consumption of children in their respective cabins through the monitoring functionality described here.

In yet another case, the local environment may correspond to an abstraction, defined by any grouping of participants. In this case, the group of participants need not operate within a defined geographic area. For instance, a group of individuals may operate presentation mechanisms that are coupled to a network (or networks), such as an intranet, the Internet, etc. Each member of the group may expressly grant any other member of the group the authority to monitor his or her resource consumption. In one scenario, this could be implemented as an add-on feature to instant messenger (IM) functionality (such as Microsoft Corporation's Instant Messenger). A member of the group can monitor the activities of other members by receiving, in peer-to-peer fashion, resource(s) that are being consumed by the members being monitored (and/or just information that describes the resources that are being consumed). Alternatively, a member can monitor the activities of other members by instructing a head-end site to download the same resource(s) that are being consumed by the members being monitored (and/or just information that describes the resources that are being consumed). Multiple participants can assume the role of master at one time, thereby keeping abreast of each other's activities. Provisions can be incorporated for allowing any member to disable this feature, to thereby preclude another group member from monitoring their activities.

Further, to repeat, the above cases emphasized applications in which there exists a supervisory relationship between monitoring agent 142 and the individuals being monitored. However, any of the above configurations can be applied to applications in which there is a non-supervisory relationship between the monitoring agent 142 and the individuals being monitored, such as in the case where a friend simply wishes to know what another friend is watching for informational purposes.

Fig. 3 provides further details regarding one exemplary implementation 300 of the system 100 shown in Fig. 1. In Fig. 3, the head-end center 104 can be implemented as one or more computer servers 302, such as a farm of computer servers. A computer server refers to a computer device that is configured to provide a service to requesting client processing devices. Although not shown, the computer servers 302 can each include one or more processors (e.g., CPUs), random access memory (RAM), read only memory (ROM), various media storage drives, various network interface functionality, various input and output devices, various internal coupling mechanisms (such as buses), and so on. The head-end center 104 can dedicate different servers 302 to handling different functions provided by the head-end center 104, such as administrative tasks, receiving/recording tasks, resource dissemination tasks, and so on. The head-end center 104 can alternatively, or in addition, allocate plural servers 302 to performing the same tasks using various load balancing algorithms to meet client demand for services. As mentioned above, the functionality associated with the head-end center 104 can be implemented at a single site or distributed over plural sites.

The resource store 112 shown in Fig. 1 can be implemented by the collection of data stores 304 shown in Fig. 2. These data stores 304 can represent any kind of magnetic storage media, optical storage media, solid state type storage media, or other kind of storage media. The data stores 304 can be maintained using any kind of database management technology. The data stores 304 can be implemented at a single site or distributed over plural sites.

As noted above, in one exemplary implementation, the source-to-local coupling mechanism 106 can be implemented as a TCP/IP WAN network 306, such as the Internet, an intranet, or some combination thereof

Fig. 3 shows one of the processing mechanisms and associated presentation devices shown in Fig. 1, namely processing mechanism 128 and associated presentation device 134. The processing mechanism 128 can be implemented as a set-top box or other application-specific unit (such as a game console, e.g., the Xbox™ game console produced by Microsoft Corporation of Redmond, Washington), a general purpose computer device, functionality integrated with the presentation device 134 itself, or other implementation. In any case, the processing mechanism 128 can include one or more processors 308 for executing machine readable code, ROM memory 310 and RAM memory 312 for storing machine readable code and other data, a network interface 314 for interacting with the head-end center 104 via the TCP/IP network 306, optional local storage 120, an I/O interface 316 for interacting with one or more user input devices, an audio-visual (A/V) interface 318 for interacting with the presentation device 134, one or more optional tuners 320 for receiving conventional broadcast programs from the other sources 118, and various other modules 322. One or more busses 324 couple all of the above-identified components together and coordinate their cooperation.

As shown in Fig. 3, RAM 312 can store processor-readable code that implements the monitoring functionality when this code is executed by the processor(s) 308. The code that implements the monitoring functionality can also be stored in one or more nonvolatile stores, such as storage 120. Alternatively, the processing mechanism 128 can implement the monitoring functionality, in whole or in part, using fixed (e.g., non-programmable) logic circuitry. In other implementations, the head-end center 104 can implement certain aspects of the monitoring functionality in cooperation with the processing mechanisms (128, 130, ... 132).

The presentation device 134 is shown in Fig. 3 as a television 326, although the presentation device 134 can also be implemented as a stereo output system, or some other kind of media output device. In other cases, the presentation device 134 can represent a combination of different output devices working in cooperation to present media resources. The processing mechanism 128 can be configured to present one or more UI presentations 328 to assist the user in interacting with the services provided by the head-end center 104, such as the PIP resource consumption presentations (described more fully below).

A remote controller 330 serves as one possible input device. A user can use the remote controller 330 to select programs, to pause programs, to resume previously paused programs, and for performing other tasks. As generally shown in Fig. 3, the remote controller 330 includes a collection of keys 332, a control module 334 for processing the user's actuation of the keys 332 to provide user instructions, and an interface module 336 for transmitting the user's instructions to the processing mechanism 128 via wireless communication (e.g., infrared communication).

A number of other input devices 338 can be used to interact with the services provided by the head-end center 104, in addition to, or as substitute for, the remote controller 330. For example, the other input devices 338 can represent a keyboard, a mouse-type input device, a joystick, and so on. Alternatively, or in addition, a user can use a separate computer device (such as a general purpose computer, a laptop computer, etc.) to enter commands to the head-end center 104 and to receive feedback from the head-end center 104, to thereby control the presentation of programs on the presentation device 134.

The implementation 300 is only exemplary; the system 100 shown in Fig. 1 can be implemented in other kinds of technical and commercial environments besides that shown in Fig. 3.

### B. Exemplary User Interface Functionality

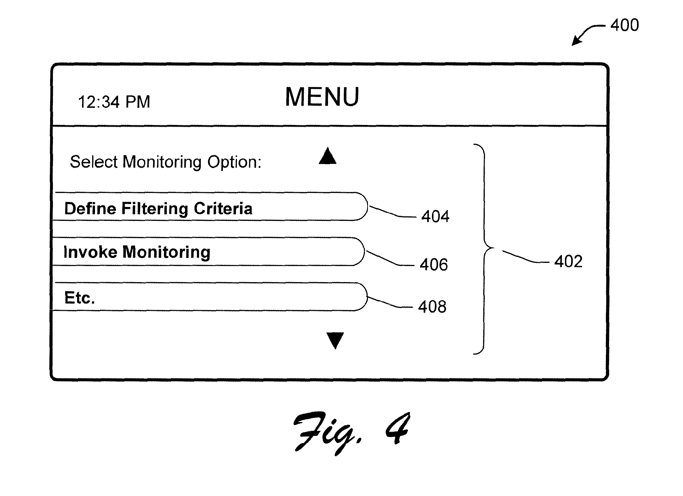

Figs. 4-9 show various user interface (UI) presentations that can be provided to the monitoring agent 142 in the course of performing a monitoring operation. In one case, these UI presentations constitute picture-in-pictures (PIPs) that can be overlaid on top of a principal picture that is being displayed by the presentation device 134 associated with the master processing mechanism 128. In another case, the UI presentations can occupy an entire display surface of the presentation device 134. In any case, each of the processing mechanisms (128, 130, ... 132) can include code specifically configured to display the UI presentations of the nature to be described below. To facilitate discussion, this section assumes that there is a supervisory relationship between the monitoring agent 142 and the person being monitored; however, the same principles can be applied to those cases where there is a peer-type relationship between the monitoring agent 142 and the person being monitored, or some other relationship.

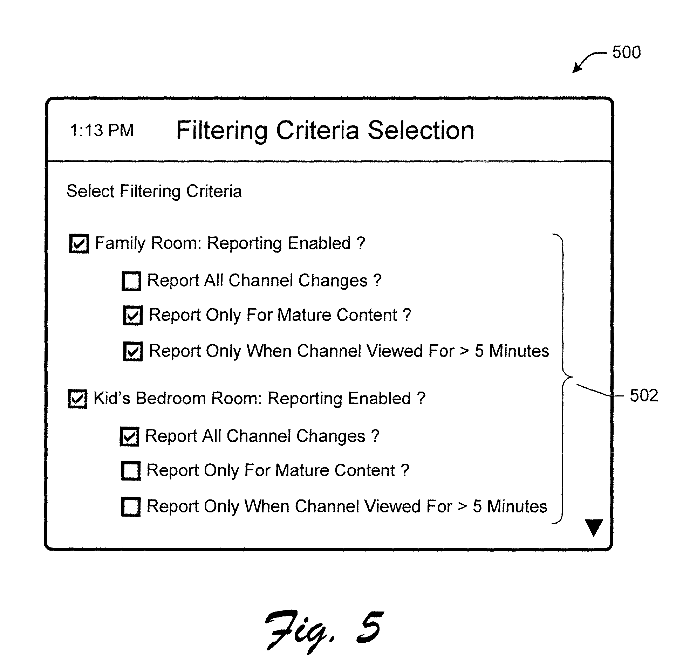

To begin with, Fig. 4 shows a UI presentation 400 that provides a menu of selections 402 associated with the monitoring functionality. A first menu option 404 can be used to activate another UI presentation that allows a user to define various criteria that will govern the behavior of the monitoring operation. Access to this criteria-definition functionality can be made contingent on the input of a valid password. Fig. 5 (to be described below) provides additional information regarding this criteria-definition functionality.

A second menu option 406 allows an authorized monitoring agent to invoke the monitoring functionality. Access to this option can also be made contingent on the input of a valid password. The activation of this option on a particular processing mechanism prompts that processing mechanism (e.g., processing mechanism 128) to assume the role of master processing mechanism, and the remainder of the processing mechanisms (130, ... 132) to assume the role of slave processing mechanisms. Activation of this option also prompts the slave processing mechanisms (130, ... 132) to forward resource consumption information that reflects the resources (e.g., programs) that are currently being consumed by those slave processing mechanisms (130, ... 132). Further, so long as the monitoring functionality remains active, the slave processing mechanisms (130, ... 132) will forward resource consumption information to the master processing mechanism 128 upon every channel change event. A channel change event occurs when a monitored user changes a channel to switch between resources being consumed. The master processing mechanism 128 can compile a resource consumption list based on the resource consumption information received from the slave processing mechanisms (130, ... 132), and display information extracted from this list in one or more resource consumption presentations for inspection by the monitoring agent 142. Figs. 6-9 (to be discussed below) show exemplary resource consumption presentations. The monitoring agent 142 can deactivate the monitoring functionality at any time, whereupon the processing mechanism 128 relinquishes its role as master, and the slave processing mechanisms (130, ... 132) stop sending resource consumption information to the processing mechanism 128.

The menu options 402 shown in Fig. 4 are exemplary and non-limiting. A number of other options can be included, as indicated by generic option 408.

Fig. 5 shows a criteria-definition UI presentation 500 that allows a user to define the behavior of the monitoring functionality. Any characteristic of the behavior can be defined by a user to suit different applications of the monitoring functionality. In one case, the criteria UI presentation 500 can allow the user to define what slave processing mechanisms (130, ... 132) should report their resource consumption information to the master processing mechanism 128. (More precisely, since any processing mechanism can assume the role of master or slave, this UI presentation 500 defines whether, if configured as a slave, a particular processing mechanism should report its resource consumption information to the master.) Further, the criteria UI presentation 500 can allow the user to define what conditions must be present in order for a slave processing mechanism (130, ... 132) to report its resource consumption information to the master processing mechanism 128. As to such conditions, a user can define criteria that specify that resource information is to be transmitted only when the monitored user has tuned to certain kinds of content, such as content having mature content. The suitability of the content can be assessed based on any kind of EPG information or other information, such as channel information, maturity rating information, and so forth. Or the suitability of the content can be assessed by subjecting the content to real-time analysis, for instance by performing voice recognition to determine whether the content contains objectionable words, and so forth.

The user can also define criteria that specify that resource information is to be transmitted only when the monitored user has tuned to certain resources for an extended period of time, for example, at least 10 seconds. This provision might avoid the necessity of notifying the monitoring agent 142 upon very quick changes in channels that are indicative of the fact that a monitored user is only channel surfing to find interesting content, but does not appear to be otherwise intent on watching objectionable content.

In any case, the above-described criteria can help reduce the volume of resource consumption information that is forwarded by the slave processing mechanisms (130, ... 132) to the master processing mechanism 128, and thereby help prevent the master processing mechanism 128 from becoming deluged with too much information. Receiving too much information can potentially tax the processing resources of the master processing mechanism 128, and, more importantly, can challenge the ability of human monitoring agent 142 to make sense of this information. Still other strategies can be used to govern the circumstances in which the slave processing mechanisms (130, ... 132) send channel event reports to the master processing mechanism 128.

The criteria-definition presentation 500 can use various UI strategies for allowing a user to define the above-described filtering criteria. The exemplary case of Fig. 5 shows a collection 502 of textual descriptions of the selectable filtering criteria. Checkboxes are associated with the respective filtering criteria. The user can activate or deactivate individual filtering criteria by entering and removing check marks from these boxes, respectively. For example, a topmost filtering entry prompts the user to indicate whether the slave processing mechanism 132 located in the family room 202 should be activated so that it will send resource consumption information to the master processing mechanism 128 upon channel change events. The indented filtering entries below this topmost entry allow the user to indicate what filtering criteria must be satisfied before this slave processing mechanism 132 transmits resource information to the slave processing mechanism 128. The particular criteria listed in Fig. 5 are intended to be illustrative and not exhaustive; different criteria may be appropriate to different applications of the monitoring functionality.

Fig. 6 shows a user interface provided by the presentation device 134 (associated with the master processing mechanism 128) upon activation of the monitoring functionality. The presentation device 134 shown there corresponds to a television set, but it could correspond to a computer monitor or any other kind of display device. In this exemplary case, the monitoring agent 142 is watching a sports program represented by principal picture 602. The monitoring functionality compiles a resource consumption list that identifies the current resource consumption by slave processing mechanisms (130, ... 132) in the local environment 102. The monitoring functionality then displays a resource consumption presentation 604 based on this list to the monitoring agent 142. In this particular example, the resource consumption presentation 604 comprises a single UI panel which is overlaid on one corner of the principal picture 602 as a picture-in-picture (PIP) display.

The resource consumption presentation 604 itself can include multiple portions associated with different slave processing mechanisms (130, ... 132). For example, a first exemplary portion 606 corresponds to slave processing device 132 and associated presentation device 138 provided in the family room 126 (with reference to Fig. 2). Each portion can present any kind of information that identifies the current resource consumption on a particular slave processing mechanism (130, ... 132). Such information can include textual information 608 that identifies salient data regarding resource consumption, including, for example: a) textual data identifying the name of the resource currently being consumed; b) textual data defining the channel source of the resource; c) textual data identifying a maturity rating assigned to the resource (or other EPG-related information); d) textual data identifying a time when the monitored user started consuming the resource; and e) textual data identifying the length of time that the monitored user has been watching this resource. This list is presented by way of illustration, not limitation.

Optionally, the portion for each slave processing mechanism (130, ... 132) can include a reduced-sized presentation of the resource that is being consumed by the slave processing mechanism (130, ... 132). Portion 606 includes reduced-size presentation 608. This reduced-sized presentation 608 can present a moving video presentation which tracks the moving state of the information being consumed by the slave processing mechanism 132, or it can represent a static snapshot (e.g., a thumbnail picture) of the information that is being consumed, or it can represent a static snapshot that is updated at prescribed intervals (for example, every five seconds). In any event, the reduced-sized presentation will require less bandwidth than the principal picture 602.

Each portion associated with each respective slave processing mechanism (130, ... 132) can also include a collection of controls. A "More Info?" control 612 prompts the monitoring functionality to provide more information regarding the program that the monitored user is consuming. A "View History" control 614 prompts the monitoring functionality to provide historical information regarding a prior succession of channels that the monitored user has consumed on the particular slave processing mechanism 132. This allows the monitoring agent 142 to determine whether there has been a pattern of objectionable resource consumption by the monitored user of the slave processing mechanism 132. A "Block" control 616 gives the monitoring agent 142 an opportunity to block the monitored user's consumption of an objectionable resource on the slave processing mechanism 132. This can be performed in various ways, such as by instructing the slave processing mechanism 132 to cease its presentation of the resource, or by instructing the head-end center 104 to cease providing such content to the slave processing mechanism 132. Where the objective is to reduce the complexity of the head-end center 104, the former strategy is preferable to the latter. Instead of, or in addition to, blocking the objectionable content, the monitoring functionality can prompt the display of a message on the slave presentation device 138 associated with the slave processing mechanism 132, which alerts the monitored user of that device 138 that they should refrain from viewing the objectionable content, etc.

A "Stop Monitoring" control 618 can prompt the monitoring functionality to terminate its operation. That is, this control 618 will prompt the slave processing mechanisms (130, ... 132) to stop sending resource consumption information to the master processing mechanism 128. This control 618 will also prompt the master processing mechanism 128 to remove the resource consumption presentation 604 from the information being presented by the presentation device 134. A "Close Panel" control 620 will deactivate the resource consumption presentation 604 but will not otherwise terminate the monitoring operation. In this case, the monitoring agent 142 can recall the resource consumption presentation 604 at a later time to view what is happening on the slave processing mechanisms (130, ... 132) in the local environment 102 at that later time. (In some configurations, it may also be appropriate to allow the slave processing mechanisms (130, ... 132) to turn off the ability of the master processing mechanism 128 to monitor its activities.)

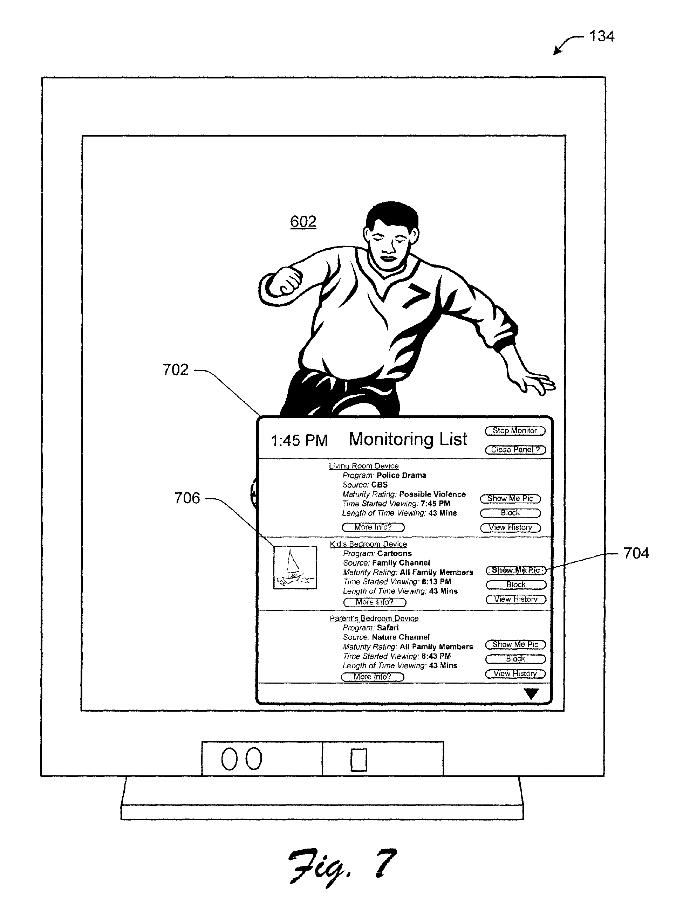

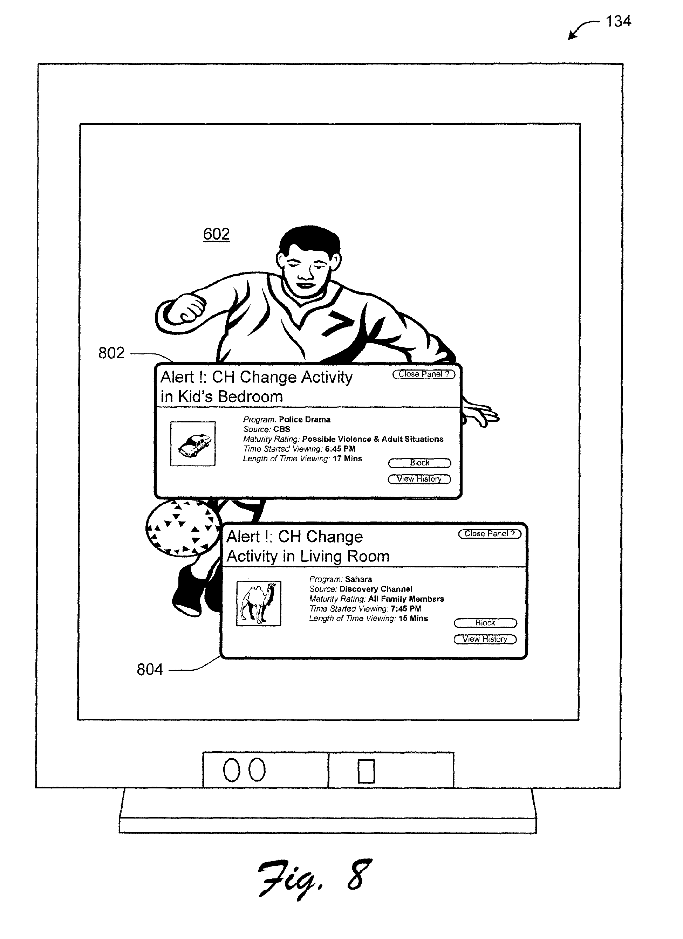

The selection and organization of consumption information shown in Fig. 6 is exemplary and non-limiting. Figs. 7 and 8, for instance, show two alternative strategies for presenting resource consumption information. In Fig. 6, for instance, each portion associated with each respective slave processing mechanism (130, .. 132) includes a reduced size presentation of the resource that is being consumed by those slave processing mechanisms (130, ... 132). This provision is informative, but, for some systems, it may impose bandwidth requirements that the systems cannot meet. Fig. 7 shows one technique for reducing the bandwidth requirements of the resource consumption presentation. The alternative resource consumption presentation 702 shown there includes "Show Me Pic" controls associated with each of the portions. Activation of this control in a particular portion will prompt the monitoring functionality to selectively show a reduced size presentation for only that portion. For instance, in Fig. 7, the monitoring agent 142 has selectively activated a Show Me Pic control 704 associated with the child's bedroom processing mechanism 132. This prompts the monitoring functionality to display a reduced size presentation 706 that reflects the resource content that is currently being consumed on the presentation device in that room. Unless activated, no other portion in the resource consumption presentation 702 shows its reduced size presentation. This provision has the effect of reducing the bandwidth requirements of the resource consumption presentation 702.

Fig. 8 shows an alternative case in which separate resource consumption presentations (802, 804) are assigned to respective slave processing mechanisms (130, ... 132). For instance, resource consumption presentation 802 can be allocated to showing the current resource consumption in the child's bedroom 124. Resource consumption presentation 804 can be allocated to showing the current resource consumption in the family room 126. The monitoring functionality can be configured such that these presentations (802, 804) appear as alerts for a predetermined amount of time, after which they automatically disappear. Or the monitoring functionality can explicitly require the monitoring agent 142 to manually deactivate these presentations (802, 804), such as by activating the "Close Panel" control contained in each window.

Again, the different implementations of the resource consumption presentations shown in Figs. 6-8 are representative and exemplary, rather than exhaustive of the ways that resource information can be presented. For instance, in another case, the monitoring agent 142 can toggle between the principal picture 602 and a full sized version of any of the resources that are currently being consumed by any of the slave processing mechanisms (130, ... 132).

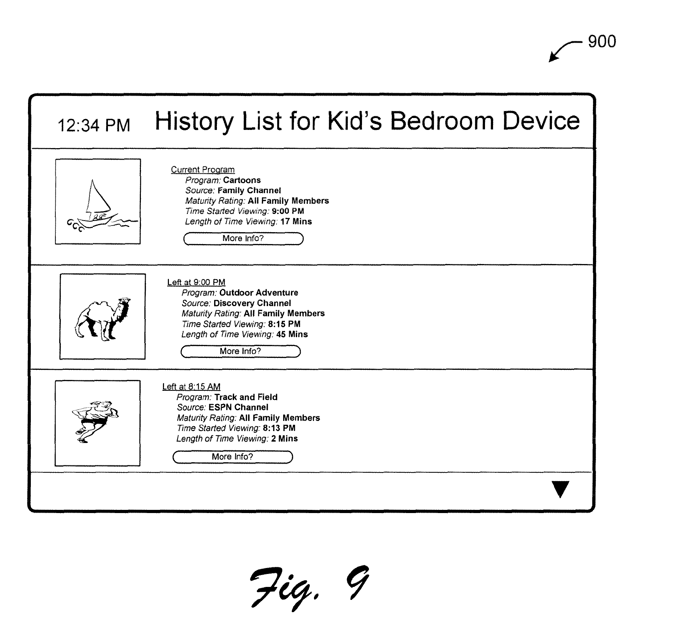

Fig. 9 shows a history presentation 900 that is displayed upon activation of the "View History" control in the resource consumption presentations (for example, the View History control 614 associated with portion 608 of Fig. 6). In this particular example, the history presentation 900 includes a historical sequence of channels visited by the child operating slave processing mechanism 130 in the child's bedroom 124. Information pertaining to the channel that is currently being viewed can be presented in a topmost portion. A second portion can present resource consumption information pertaining to the channel that was watched just prior to the current channel. A third portion can present resource consumption information pertaining to the channel that was watched just prior to the second channel, and so on. The resource consumption information can present any kind of data, such as: textual information identifying the resource that is being (or was) consumed; b) textual information identifying the source of the resource; c) textual information identifying the maturity rating of the resource or other EPG data; d) textual information identifying the time when the monitored user started viewing the resource; and e) a length of time that the monitored user has viewed the resource. Each portion can also provide a representative reduced size snapshot of the resource content that was viewed (where such snapshot can be automatically displayed or selectively activated). The topmost snapshot can track the actual presentation of the resource that is concurrently being consumed at the slave processing mechanism 130. Again, the selection and organization of information shown in the history presentation 900 is intended to be illustrative and non-limiting.

Fig. 9 shows just one kind of summary-type display that can provide insight in the past viewing activities of monitored users. Other presentations (not shown) can provide statistical information regarding resource consumption, and can present such information in various textual reports, graphical charts, etc.

### C. Exemplary Method of Operation

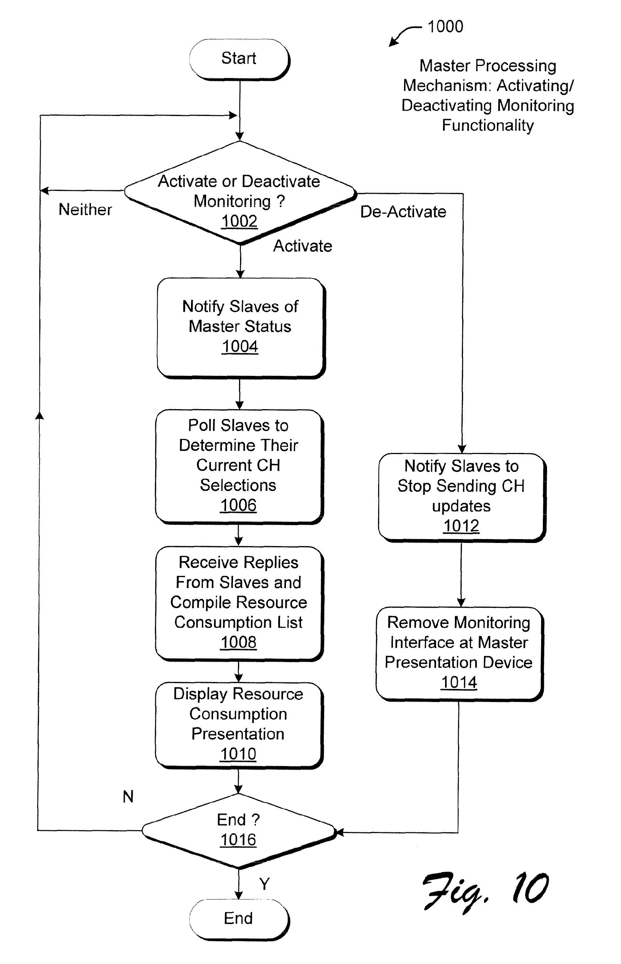

Figs. 10-12 describe the operation of the system 100 of Fig. 1 in flow chart form. To facilitate discussion, certain operations are described as constituting distinct steps performed in a certain order. Such implementations are exemplary and non-limiting. Certain steps described herein can be grouped together and performed in a single operation, and certain steps can be performed in an order that differs from the order employed in the examples set forth in this disclosure. Again, to facilitate discussion, this section assumes that there is a supervisory relationship between the monitoring agent 142 and the person being monitored; however, the same principles can be applied to those cases where there is a peer-type relationship between the monitoring agent 142 and the person being monitored, or some other relationship.

To begin with, Fig. 10 shows a procedure 1000 performed at the master processing mechanism when the monitoring functionality is activated and deactivated. To continue the example introduced in Fig. 1, the procedure 1000 will be described with reference to the master processing mechanism 128 and slave processing mechanisms (130, ... 132).

In step 1002 the processing mechanism 128 determines whether the monitoring functionality has been activated or deactivated. The monitoring functionality can be activated when the monitoring agent 142 activates the menu option 406 (shown in Fig. 4) associated with the monitoring functionality, or by some other activation mechanism. Activation of the monitoring functionality may also require the monitoring agent 142 to enter a valid password, thus restricting activation of this functionality to authorized persons (such as parents). The monitoring functionality can be deactivated in various ways, such as by activating the Stop Monitoring control 618 shown in Fig. 6.

Assume first that the monitoring agent 142 has activated the monitoring functionality. This prompts, in step 1004, the master processing mechanism 128 to transmit a message to the slave processing mechanisms (130, ... 132) which notifies the slave processing mechanisms: a) that the processing mechanism 128 has been assigned the role of master; and b) that the slave processing mechanism (130, ... 132) have been assigned the role of slaves. In step 1106, the master processing mechanism 128 polls the slave processing mechanisms (130, ... 132) to determine the resources that they are currently consuming. In one case, the polling request referred to in step 1006 is implied in the notification sent out by the master processing mechanism 128 in step 1004. In this case, steps 1004 and 1006 can be accomplished by a single message that the master processing mechanism 128 sends to the slave processing mechanisms (130, ... 132). In another case, steps 1004 and 1006 can be accomplished by sending two messages, that is, a first message that conveys the notification and a second message that conveys the polling request. (Although not shown, the master processing mechanism 128 can also poll its slave processing mechanisms (130, ... 132) if it has been inactive for some time, and therefore does not have an up-to-date status of the resources being consumed by the slave processing mechanisms (130, ... 132)).

In step 1008, the master processing mechanism 128 receives resource consumption information from the polled slave processing mechanisms (130, ... 132). This resource information can supply any of the metadata described above pertaining to resources being consumed. This step can also include compiling the resource consumption list based on the received resource processing information.

In step 1010, the master processing mechanism 128 displays a resource consumption presentation based on the compiled resource consumption list. Figs. 6-8 show exemplary resource consumption presentations.

On the other hand, assume, in step 1002, that the master processing mechanism 128 detects that the monitoring functionality has been deactivated. This causes the master processing mechanism 128 to relinquish its master status, and, implicitly, also causes the slave processing mechanisms (130, ... 132) to relinquish their slave status.

More specifically, in step 1012, upon de-activation, the master processing mechanism 128 sends a message to the slave processing mechanisms (130, ... 132) that instructs these mechanisms (130, ... 132) to stop sending resource information to the master processing mechanism 128. In step 1014, the master processing mechanism 128 also stops displaying the resource consumption presentation.

In step 1016, the master processing mechanism 128 determines whether it should remain powered on and active. If the master processing mechanism 128 has been powered down or otherwise deactivated, it completes the processing shown in Fig. 10. Otherwise, the master processing mechanisms repeatedly revisits the determination of step 1002 to determine whether the master processing role has been activated or deactivated with respect to this particular processing mechanism 128. Other processing mechanisms in the local environment 102 perform the same procedure 1000 as shown in Fig. 10; as such, each of the processing mechanisms has the equal ability to assume the role of master.

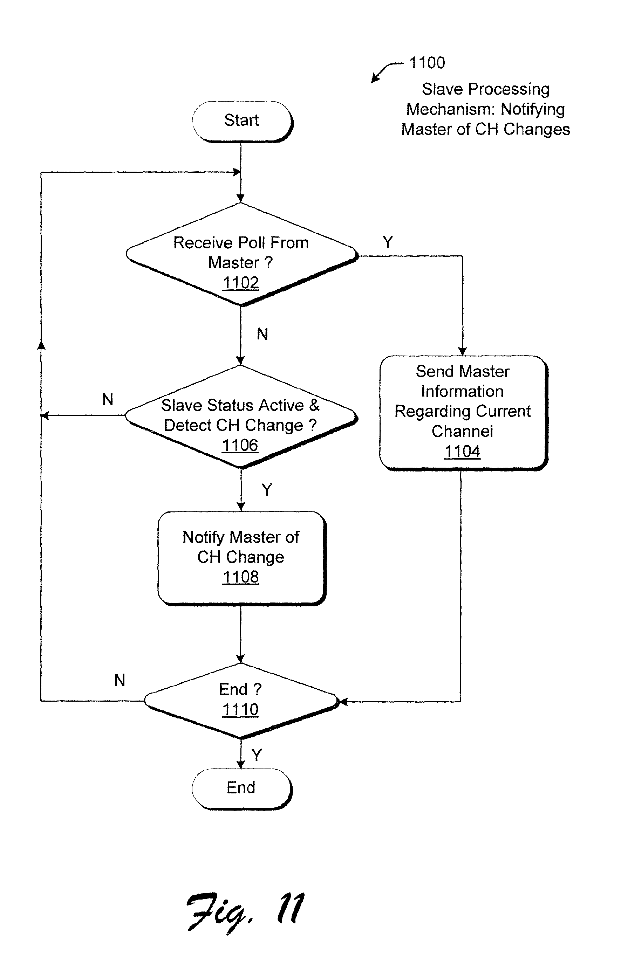

Fig. 11 shows a procedure 1100 performed by each of the slave processing mechanisms (130, ... 132). There are two functions encompassed by this procedure 1100. In a first function, the slave processing mechanisms (130, ... 132) respond to the master processing mechanism 128 after it first assumes the role of master. In a second function, the slave processing mechanisms (130, ... 132) send resource consumption information to the master processing mechanism 128 upon detection of channel change events.

As to the first function, in step 1102, the slave processing mechanisms (130, ... 132) determine whether they have been requested by the master processing mechanism 128 to transmit information pertaining to their current resource consumption. If so, in step 1104, the slave processing mechanisms (130, ... 132) transmit their current resource consumption information to the master processing mechanism 128. Such resource consumption information can include any of the metadata described above.

On the other hand, in step 1106, already activated slave processing mechanisms (130, ... 132) determine whether they have detected a channel change event. A channel change event occurs when the monitored user changes the channel to watch a new resource. In an alternative or supplemental implementation, a channel change event may indicate that there has been a change in the type or nature of the resource that is being consumed, but that the monitored user of a slave processing mechanism continues to view the same channel. This might occur where the nature of programming dramatically changes on a single channel based on time of day. In this case, for instance, it may be appropriate for a child to watch such a channel during the day, but not at night.

In step 1108, the slave processing mechanisms (130, ... 132) transmit the resource consumption information associated with the channel change events to the master processing mechanism 128. The resource consumption information can include any of the metadata previously described.

Finally, in step 1110, the slave processing mechanisms (130, ... 132) determine whether they should remain powered on and active. If the slave processing mechanisms (130, ... 132) have been powered down or otherwise deactivated, they complete the processing shown in Fig. 11.

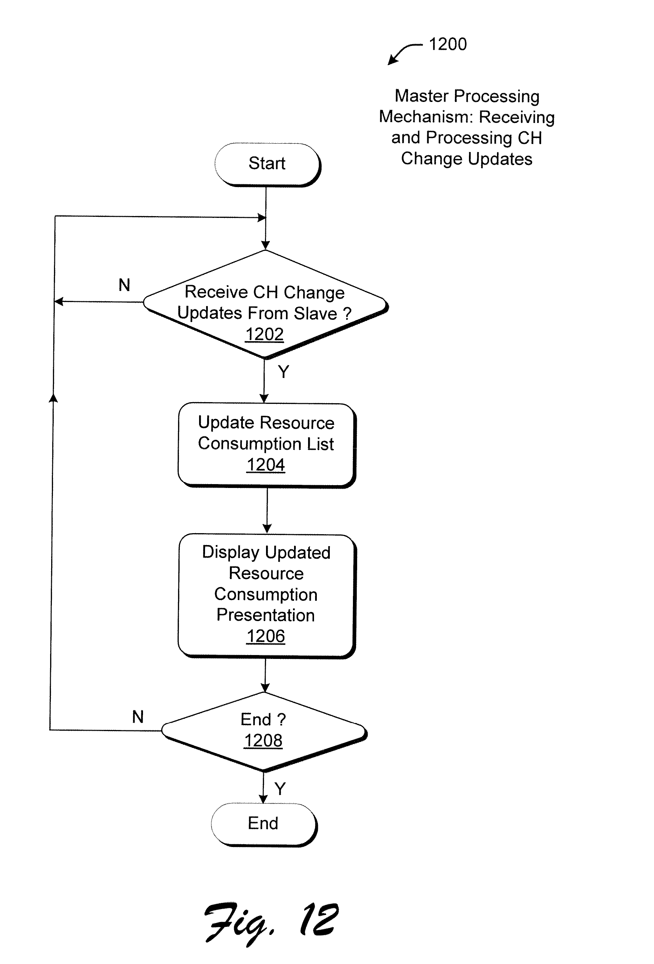

Fig. 12 shows a procedure 1200 performed by the master processing mechanism 128 in response to the steps performed in Fig. 11 by the slave processing mechanisms (130, ... 132). Namely, the procedure 1200 defines the steps whereby the master processing mechanism 128 collects and processes the resource consumption information propagated to it by the slave processing mechanisms (130, ... 132) by virtue of the processing of Fig. 11.

In step 1202, the master processing mechanism 128 determines whether it has received new resource information from any slave processing mechanism (130, ... 132). If so, in step 1204, the master processing mechanism 128 updates its resource consumption list that reflects the current resource consumption of all of the slave processing mechanisms (130, ... 132) in the local environment 102.

In step 1206, the master processing mechanism 128 displays an updated resource consumption presentation based on the updated resource consumption list. Figs. 6-8 show examples of resource consumption presentations.

Finally, in step 1208, the master process mechanism 128 determines whether it should remain powered on and active. If the master processing mechanism 128 has been powered down or otherwise deactivated, it completes the processing shown in Fig. 12. If not, the master processing mechanism repeats the procedure 1200 of Fig. 12.

In closing, a number of examples have been presented in this disclosure in the alternative (e.g., case A or case B). In addition, this disclosure encompasses those cases which combine alternatives in a single implementation (e.g., case A and case B), even though this disclosure may not expressly mention these conjunctive cases in every instance.

More generally, although the invention has been described in the context of specific to structural features and/or methodological acts, it is to be understood that the invention defined in the appended claims is not necessarily limited to the specific features or acts described. Rather, the specific features and acts have been presented as exemplary strategies for implementing the claimed invention.

## Claims

1. A method for monitoring resource consumption in a local environment including a plurality of processing mechanisms, comprising:
assigning one of the processing mechanisms the role of master processing mechanism, thereby making at least one other of the processing mechanisms a slave processing mechanism;
collecting, by the master processing mechanism, resource consumption information that describes the consumption of a resource by said at least one slave processing mechanism; and
providing a resource consumption presentation based on the collected resource consumption information.

2. The method according to claim 1, wherein the resource consumed by said at least one slave processing mechanism pertains to a media resource having audio and/or visual content.

3. The method according to claim 1, wherein the resource consumed by said at least one slave processing mechanism pertains to an interactive resource that allows a user of said at least one slave processing mechanism to interact with the resource.

4. The method according to claim 1, wherein the assigning comprises activating a monitoring operation at a particular processing mechanism to assign that particular processing mechanism the role of the master processing mechanism.

5. The method according to claim 4, where the activating is contingent on entering a valid password.

6. The method according to claim 1, wherein the collecting comprises collecting resource consumption information from said at least one slave processing mechanism when the master processing mechanism is assigned the role of master processing mechanism to thereby determine a current resource being consumed by said at least one slave processing mechanism.

7. The method according to claim 1, wherein the collecting comprises collecting resource consumption information from said at least one slave processing mechanism when said at least one slave processing mechanism detects that there has been a change in the resource consumption at said at least one slave processing mechanism.

8. The method according to claim 1, wherein the resource consumption presentation provides textual information that describes the resource being consumed by said at least one slave processing mechanism.

9. The method according to claim 8, wherein the textual information includes at least one of: a name of the resource being consumed; a source of the resource being consumed; rating metadata associated with the resource being consumed; a time when a user commenced consuming the resource; or a length of time that the user has been consuming the resource.

10. The method according to claim 1, wherein the resource consumption presentation includes a reduced size rendition of the resource being consumed by said at least one slave processing mechanism.

11. The method according to claim 10, wherein the user selectively activates the reduced size rendition.

12. The method according to claim 1, wherein the resource consumption presentation includes functionality which allows the user to display a history of the resources that have been consumed by said at least one slave processing mechanism.

13. A machine readable medium including machine readable instructions for implementing the assigning, collecting and providing of claim 1.

14. An apparatus for monitoring resource consumption in a local environment including a plurality of processing mechanisms, comprising:
logic configured to assign one of the processing mechanisms the role of master processing mechanism, thereby making at least one other of the processing mechanisms a slave processing mechanism;
logic configured to collect, by the master processing mechanism, resource consumption information that describes the consumption of a resource by said at least one slave processing mechanism; and
logic configured to provide a resource consumption presentation based on the collected resource consumption information.

15. The apparatus according to claim 14, wherein the resource consumed by said at least one slave processing mechanism pertains to a media resource having audio and/or visual content.

16. The apparatus according to claim 14, wherein the resource consumed by said at least one slave processing mechanism pertains to an interactive resource that allows a user of said at least one slave processing mechanism to interact with the resource.

17. The apparatus according to claim 14, wherein the logic for assigning is configured to assign the role of master processing mechanism by activating a monitoring operation at a particular processing mechanism.

18. The apparatus according to claim 18, wherein the activating is configured to be contingent on entering a valid password.

19. The apparatus according to claim 14, wherein the logic for collecting is configured to collect resource consumption information from said at least one slave processing mechanism when the master processing mechanism is assigned the role of master processing mechanism to thereby determine a current resource being consumed by said at least one slave processing mechanism.

20. The apparatus according to claim 14, wherein the logic for collecting is configured to collect resource consumption information from said at least one slave processing mechanism when said at least one slave processing mechanism detects that there has been a change in resource consumption at said at least one slave processing mechanism.

21. The apparatus according to claim 14, wherein the logic for providing is configured to display textual information that describes the resource being consumed by said at least one slave processing mechanism.

22. The apparatus according to claim 21, wherein the textual information includes at least one of: a name of the resource being consumed; a source of the resource being consumed; rating metadata associated with the resource being consumed; a time when a user commenced consuming the resource; or a length of time that the user has been consuming the resource.

23. The apparatus according to claim 14, wherein the logic for providing is configured to display a reduced size rendition of the resource being consumed by said at least one slave processing mechanism.

24. The apparatus according to claim 23, wherein the logic for providing is configured to display the reduced size rendition upon selective activation by a user.

25. The apparatus according to claim 14, wherein the resource consumption presentation comprises functionality configured to allow the user to display a history of the resources that have been consumed by said at least one slave processing mechanism.

26. A machine readable medium including machine readable instructions for implementing each of the logic recited in claim 14.

27. A method for monitoring resource consumption, comprising:
receiving resource consumption information which reflects a change in resource consumption that has occurred on at least one slave presentation mechanism; and
displaying a resource consumption presentation that describes the change in the resource consumption,
wherein the resource consumption presentation includes at least one of:
textual information that describes the change in the resource consumption; or
picture information that describes the change in the resource consumption.

28. The method of claim 27, wherein the resource consumption presentation includes plural sections that describe changes in resource consumption in plural respective slave presentation mechanisms.

29. A machine readable medium including machine readable instructions for implementing the receiving and displaying recited in claim 27.

30. An apparatus for monitoring resource consumption, comprising:
logic for receiving resource consumption information which reflects a change in resource consumption that has occurred on at least one slave presentation mechanism; and
logic for displaying a resource consumption presentation that describes the change in the resource consumption,
wherein the resource consumption presentation includes at least one of:
textual information that describes the change in the resource consumption; or
picture information that describes the change in the resource consumption.

31. The apparatus of claim 30, wherein the resource consumption presentation includes plural sections that describe changes in resource consumption in plural respective slave presentation mechanisms.

32. A machine readable medium including machine readable instructions for implementing each of the logic recited in claim 30.

33. A system for monitoring consumption of resources, comprising:
a source for providing resources for consumption;
plural processing mechanisms for processing resources for presentation;
plural presentation devices associated respectively with the plural processing mechanisms;
a local coupling mechanism for coupling the plural processing mechanisms together; and
a source-to-local coupling mechanism for coupling the source to the local coupling mechanism;
wherein each of the plural processing mechanisms includes logic configured to selectively monitor resource consumption in another processing mechanism, and display a presentation which describes that resource consumption.

34. The system of claim 33, wherein the plural processing mechanisms comprise plural respective set-top boxes associated with the respective plural presentation devices.

35. The system of claim 33, wherein the plural presentations devices comprise plural television devices.

36. The system of claim 33, wherein the source-to-local coupling mechanism is configured to transfer resources to the plural processing mechanism using Internet Protocol (IP).
